# EUROPÄISCHE PATENTSCHRIFT

(11) **EP 2 340 688 B1**
(45) Veröffentlichungstag und Bekanntmachung des Hinweises auf die Patenterteilung: **04.09.2013**
(21) Anmeldenummer: 09744621.5
(22) Anmeldetag: 15.10.2009
(51) Int. Cl.: H05B 33/08

(54) **SCHALTUNG ZUM BETREIBEN MINDESTENS EINER LED**
CIRCUIT FOR THE OPERATION OF AT LEAST ONE LED
CIRCUIT POUR FAIRE FONCTIONNER AU MOINS UNE DEL

(30) Priorität: 22.10.2008 DE 102008052714
(43) Veröffentlichungstag der Anmeldung: 06.07.2011
(73) Patentinhaber: Tridonic GmbH & Co KG, 6851 Dornbirn (AT); Tridonic AG, 8755 Ennenda (CH)
(72) Erfinder: MARENT, Günter, 6780 Bartholomäberg (AT); ZIMMERMANN, Michael, 8888 Heiligkreuz (CH); BARTH, Alexander, 6861 Alberschwende (AT); MAYRHOFER, Markus, 6850 Dornbirn (AT)
(74) Vertreter: Rupp, Christian
(86) Internationale Anmeldenummer: PCT/EP2009/007405
(87) Internationale Veröffentlichungsnummer: WO 2010/046055

(56) Entgegenhaltungen:
- WO-A1-2006/093870
- DE-A1-102006 034 371
- US-A1- 2006 113 975

## Beschreibung

Die Erfindung betrifft eine Schaltung zum Betreiben mindestens einer LED ("Treiberschaltung"). Eine derartige Treiberschaltung weist auf:
Eingangsanschlüsse, die an eine Eingangs- bzw. Betriebsspannung in Form einer Gleichspannung oder einer gleichgerichteten Wechselspannung anzuschließen sind,
Ausgangsanschlüssen, an die ein Lastkreis anzuschließen ist, der die mindestens eine LED enthält,
einen getakteten Schalter,
eine Steuerschaltung zum Takten des Schalters, die als IC, vorzugsweise als ASIC, ausgebildet und mit Eingangs- und Ausgangspins versehen ist,
wobei die Steuerschaltung in Abhängigkeit von mindestens zwei Istwert-Signalen ein Taktsignal für den Schalter erzeugt (insofern liegt also ein Regelkreis mit der Stellgrösse "Taktung des Schalters" vor),
wobei die beiden Istwert-Signale verschiedenen Schaltphasen des Schalters zugeordnet sind,
wobei die Drossel so gestaltet ist, dass sie in einer Schaltphase des Schalters aufgeladen und in der anderen Schaltphase entladen wird, und
wobei mindestens in der letztgenannten Schaltphase ein Strom durch den Lastkreis getrieben wird.

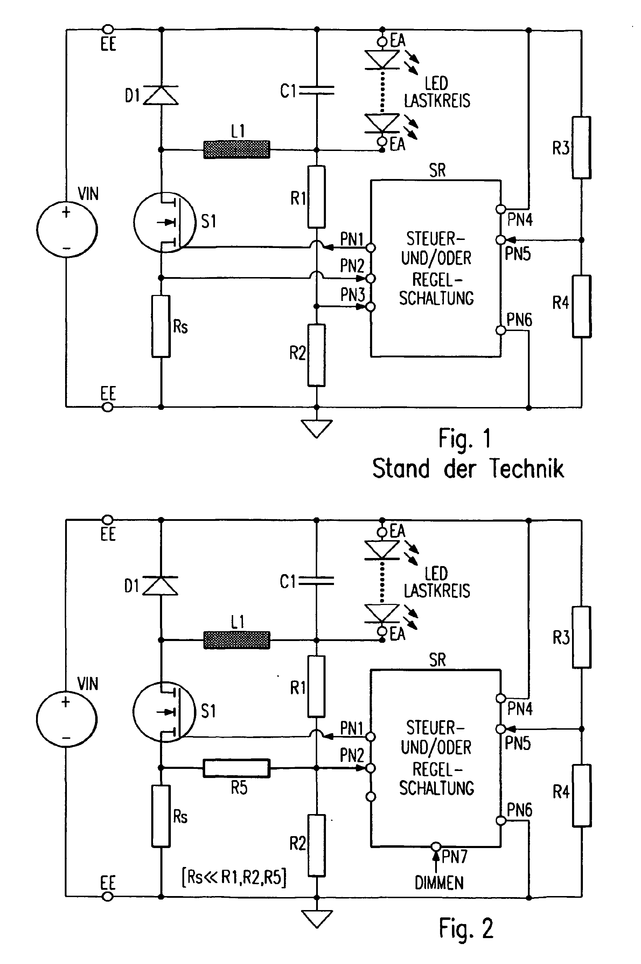

Eine Schaltung der vorstehend beschriebenen Art ist bekannt (WO 2007/121870 A1). Bei dieser bekannten Schaltung werden zwei Istwert-Signale erzeugt und zwei dafür vorgesehenen Eingangspins eines ASIC zugeführt. Das erste Istwert-Signal repräsentiert den Drosselstrom während der Durchschaltphase des Schalters. Das zweite Istwert-Signal repräsentiert einen Wert, aus dem unter Berücksichtigung der ebenfalls als Istwert-Signal ermittelten Betriebsspannung die Spannung über dem Lastkreis ermittelt werden kann. Damit repräsentiert das zweite Istwert-Signal auch die Spannung über dem Lastkreis während der Sperrphase des Schalters. Für das die Betriebsspannung repräsentierende Istwert-Signal ist ein weiterer Eingangs-Pin des ASIC vorgesehen. Die bekannte Schaltung ist in Figur 1 gezeigt.

Die von der Schaltung für den Lastkreis zur Verfügung gestellte Leistung hängt von verschiedenen Parametern ab, u. a. auch von der Last selbst. Um die Schaltung an bisweilen nicht genau bekannte oder veränderbare Lasten anpassen zu können, kann die Taktfrequenz oder das Taktverhältnis für den getakteten Schalter verändert werden. Dazu benötigt das ASIC Informationen darüber, wie sich die Last auf den Betrieb der Schaltung auswirkt. Diese Informationen liefern die mindestens zwei Istwert-Signale, wobei jedes Istwert-Signal einer anderen Schaltphase des Schalters zugeordnet ist. Wie erwähnt, ist bei dem bekannten ASIC für jedes der beiden Istwert-Signale ein separater Eingangs-Pin vorgesehen.

Die Druckschrift US 2006/0113975 A1 betrifft eine Schaltung zur Steuerung einer Leuchtdiode (LED). Die Schaltung umfasst eine Drossel und einen Schalter, der alternierend ein- und ausgeschaltet wird, so dass die Drossel entsprechend aufgeladen bzw. entladen wird. Die Schaltung umfasst weiterhin einen ersten Sensor zur Messung des Eingangsstroms der Schaltung sowie einen zweiten Sensor zur Messung des Ausgangsstroms des Sensors. Beim Start der Schaltung bzw. der Lampe wird die Schaltung abhängig vom gemessenen Eingangsstrom gesteuert. Im normalen Betrieb wird die Schaltung abhängig vom gemessenen Ausgangsstrom angesteuert.

Der Erfindung liegt die Aufgabe zugrunde, die Schaltung bzw. deren integrierte Steuerschaltung (bspw. ASIC, µC etc.) einfacher zu gestalten und damit billiger herstellen zu können.

Die Lösung dieser Aufgabe ist Gegenstand der Ansprüche, auf deren Text als Offenbarung in der Beschreibung vollinhaltlich Bezug genommen wird.

Ein Lösungsvorschlag besteht darin, dass die beiden Istwert-Signale einen gemeinsamen Eingangspin zugeführt werden. Dazu werden sie an einem gemeinsamen Messpunkt der LED-Treiberschaltung abgegriffen. Dadurch kann mindestens ein Pin für den IC eingespart werden. Damit der IC die Istwert-Signale diskriminieren und separat auswerten kann, wird vorzugsweise vorgeschlagen, entsprechende Entkopplungsmittel vorzusehen. Lösungsdetails finden sich in den abhängigen Ansprüchen.

Ausführungsbeispiele werden anhand der Zeichnungen beschrieben.

Es zeigen:
- Fig. 1: eine den Stand der Technik repräsentierende bekannte Schaltung (WO 2007/121945 A2); und
- Fig. 2 bis 11: verschiedene Ausführungsbeispiele von erfindungsgemäßen Schaltungen.

Das Funktionsprinzip der erfindungsgemäßen Schaltung soll zunächst anhand von Figur 1 erläutert werden. Die Schaltung zum Betreiben eines LED-Lastkreises ("LED-Treiberschaltung") weist zwei Eingangsanschlüsse ("Eingangs-Pins") EE und zwei Ausgangsanschlüsse ("Ausgangs-Pins") EA auf.

Der LED-Lastkreis ist mit den beiden Ausgangsanschlüssen EA verbunden und besteht aus einer Serienschaltung von LEDs. Die Eingangsanschlüsse EE der Schaltung sind mit einer Eingangsspannungsquelle bzw. Betriebsspannungsquelle VIN verbunden, die an die Schaltung eine Gleichspannung oder eine gleichgerichtete Wechselspannung liefert. Das negative Gleichspannungspotential der Betriebsspannung liegt an dem unteren Eingangsanschluss EE und bildet so einen Bezugspotential bzw. Masse. Das positive Potential der Betriebsspannung liegt an dem oberen Eingangsanschluss EE der Schaltung und bildet so einen Hochpotentialpunkt. Der LED-Lastkreis liegt zwischen dem Hochpotentialpunkt und einem Mittelpotentialpunkt, was später im Detail erläutert werden wird.

Die Spannung an den Eingangsanschlüssen kann bspw. durch eine aktive (getaktete) Leistungsfaktor-Schaltung (PFC-Schaltung) bereitgestellt werden.

Über der Betriebsspannung liegt eine Serienschaltung aus einer Rückflussdiode D1, einen getakteten Schalter S1 und einem niederohmigen Messwiderstand ("Shunt") Rs. Die Rückflussdiode D1 liegt mit ihrer Kathode am Hochpotentialpunkt. Sie ist mit ihrer Anode mit dem Drain-Anschluss des als MOSFET ausgebildeten Schalters S1 verbunden. Der Shunt Rs liegt zwischen dem Source-Anschluss und Masse. Zwischen dem Mittelpotentialpunkt des Lastkreises und dem Verbindungspunkt von Schalter S1 und Rückflussdiode D1 erstreckt sich eine Drossel L1. Der LED-Lastkreis ist vorzugsweise von einem Ladekondensator C1 überbrückt.

Der Schalter S1 wird von einer Steuerschaltung SR angesteuert (getaktet) und weist dazu ein Ausgangspin PN1 auf, das mit dem Gate-Anschluss des Schalters S1 verbunden ist. Die Steuerschaltung SR weist weiterhin ein Eingangspin PN2 für ein erstes Istwert-Signal und ein weiteres Eingangspin PN3 für ein zweites Istwert-Signal auf. Ferner ist die Steuerschaltung SR noch mit einem weiteren Eingangspin PN5 versehen, dem ein drittes Istwert-Signal zugeführt wird.

Insofern liegt also ein Regelkreis mit der Stellgrösse "Taktung des Schalters" vor.

Ein erster Spannungsversorgungspin PN4 ist mit dem Hochpotentialpunkt verbunden, und ein zweiter Spannungsversorgungspin PN6 ist mit Masse verbunden, um auf diese Weise die Steuerschaltung SR mit der notwendigen Betriebsenergie zu versorgen.

Wenn der Schalter S1 durchgeschaltet wird, fließt Strom von dem negativen Betriebspotentialpunkt (Masse) über den Shunt Rs, durch den Schalter S1, ferner durch die Drossel L1 und den LED-Lastkreis. In dieser Durchschaltphase werden die LEDs von Strom durchflossen und können dadurch leuchten. Gleichzeitig lädt sich die Drossel L1 magnetisch auf. Die Rückflussdiode D1 ist in dieser Phase gesperrt. Auch der Ladekondensator C1 wird aufgeladen und glättet den Stromfluss durch den LED-Lastkreis.

Wenn der Schalter S1 gesperrt wird, entlädt sich die Drossel L1 über den LED-Lastkreis und die nunmehr leitend werdende Rückflussdiode D1. Dabei nimmt der Strom durch den LED-Lastkreis kontinuierlich ab, bis die Drossel L1 um teilweise oder vollständig entladen ist. Auch der Ladekondensator C1 entlädt sich.

Wenn die Drossel L1 vollständig entladen wird, dann entlädt sich der Ladekondensator C1 zeitlich über die vollständige Entladung der Drossel L1 hinaus, so dass der Strom durch die Drossel L1 durch Null geht, der Strom durch den LED-Lastkreis aber weiterfließt. Bei einem erneuten Durchschalten des Schalters S1 wiederholt sich der Vorgang. Auf diese Weise entsteht über dem LED-Lastkreis eine sägezahnförmige Spannung. Auch der Strom durch den LED-Lastkreis verläuft sägezahnförmig um einen Mittelwert, vorzugsweise, ohne auf Null abzusinken (nichtlückender Strombetrieb, "continous conduction mode"), er kann aber auch auf Null absinken (Grenzbetrieb zwischen dem nichtlückenden und lückenden Strombetrieb, "Critical mode" bzw. "borderline mode" oder lückender Strombetrieb, "discontinous conduction mode").

Die Welligkeit des Mittelwertes hängt u. a. von der Größe des Ladekondensators C1 ab. Auch der Strom durch die Drossel L1 verläuft sägezahnförmig um einen Mittelwert, entweder, ohne auf Null abzusinken (nichtlückender Strombetrieb), oder er sinkt auf Null (Grenzbetrieb zwischen dem nichtlückenden und lückenden Strombetrieb oder lückender Strombetrieb).

Wenn die Durchschaltphase des Schalters S1 verlängert und die Sperrphase verkürzt werden, d.h. wenn das Taktverhältnis der Schaltsignale für den Schalter S1 geändert wird, so erhöht sich insgesamt der dem LED-Lastkreis zugeführte mittlere Stromwert und damit auch die dem LED-Lastkreis zugeführte Leistung. Umgekehrt werden Strom und Leistung vermindert, wenn die Durchschaltphase für den Schalter S1 verkürzt und die Sperrphase verlängert werden.

Der Strom durch den Lastkreis und die Spannung an dem Lastkreis sowie die dem Lastkreis zugeführte Leistung hängen aber nicht nur vom Taktverhältnis oder von der Taktfrequenz ab, mit der der Schalter S1 gesteuert wird, sondern neben weiteren anderen Parametern, wie der Induktivität der Drossel L1 oder der Kapazität des Ladekondensators C1, auch von der Beschaffenheit des Lastkreises selbst. Wenn die Beschaffenheit des Lastkreises unbekannt ist oder beispielsweise durch Alterung variiert, so ändern die Steuer- bzw. Regelbedingungen für die Taktung des Schalters S1. Das gilt im besonderen Maße, wenn der Lastkreis aus einer unbekannten Zahl von LEDs besteht. Es ist also erforderlich, der Steuer- /oder Regel-Schaltung SR Informationen zuzuleiten, die es ihr ermöglichen, die Steuersignale für das Takten des Schalters S1 zu berechnen.

Ein erstes Istwert-Signal ist der Schalterstrom, bspw. gemessen über die Spannung, die während der Durchlassphase des Schalters S1 über dem Shunt Rs abfällt. Diese Spannung repräsentiert den durch die Drossel L1 während der Durchschaltphase fliessenden Strom und wird dem Pin PN2 zugeführt. Das erste Istwert-Signal ist natürlich "Null" in der Zeitdauer, während der der Schalter S1 gesperrt wird. Für die Sperrphase wird ein zweites Istwert-Signal ermittelt, das von der über dem Widerstand R2 eines Spannungsteilers R1/R2 abfallenden Spannung gebildet ist und indirekt oder direkt die Drosselspannung oder die Spannung über die LED-Strecke in der Sperrphase repräsentiert. Dazu ist der Spannungsteiler R1/R2 zwischen Masse und dem Mittelpotentialpunkt geschaltet.

Zwischen Masse und dem Hochpotentialpunkt ist ein weiterer Spannungsteiler R3/R4 geschaltet. Die über dem Widerstand R4 abfallende Spannung wird dem Eingangspin PN5 zugeführt. Sie repräsentiert die Eingangsspannung VIN in beiden Schaltphasen. Die Steuerschaltung SR kann nun die Spannung über den Lastkreis berechnen, indem sie von der Eingangs- bzw. Betriebsspannung VIN die Spannung subtrahiert, die mittels des Spannungsteilers R1/R2 gemessen wird und - wie erwähnt - der Spannung zwischen Masse und dem Mittelpotential entspricht.

Die Eingangs- bzw. Betriebsspannung VIN kann auch bekannt sein und muß nicht über einen Spannungsteiler R3/R4 gemessen werden. Dies kann beispielsweise der Fall sein, wenn die Spannung an den Eingangsanschlüssen VIN durch eine aktive (getaktete) Leistungsfaktor-Schaltung (PFC-Schaltung) bereitgestellt und auf einen fixen Wert geregelt wird.

Damit stehen für die Berechnung des Tastverhältnisses und der Tastfrequenz für den Schalter S1 in der Durchschaltphase der Drosselstrom und in der Sperrphase die Lastkreisspannung zur Verfügung. Es ist gedanklich ohne weiteres nachvollziehbar, dass dadurch das angestrebte Ziel, nämlich die Berechnung der Schaltsignale für den Schalter S1 möglich ist.

Soweit die grundsätzliche Funktionsbeschreibung der Schaltung anhand von Figur 1, die den Stand der Technik repräsentiert.

Die die einzelnen Ausführungsformen der Erfindung repräsentierenden Figuren 2 bis 10 sind so gezeichnet, dass neue und erfindungswesentliche Elemente durch eine dicke Strichführung hervorgehoben sind.

In Figur 2 ist der noch in Figur 1 vorhandene Eingangspin 3 weggelassen, d.h. eingespart worden. Die über dem Shunt RS abfallende Spannung bildet demnach das erste Istwert-Signal, und die über dem Widerstand R2 des Spannungsteilers R1/R2 abfallende Spannung bildet das zweite Istwert-Signal. Die beiden Istwert-Signale werden in zeitlich getrennten Phasen (Einschaltphase bzw. Ausschaltphase des Schalters des LED-Treibers) ausgewertet ("Zeitmultiplex"). Die beiden Istwert-Signale werden an einem gemeinsamen Messpunkt der LED-Treiberschaltung abgegriffen und können somit einem gemeinsamen Eingangspin PN2 der Steuer- und/oder Regelschaltung SR zugeführt werden. Für die Sperrphase wird ein zweites Istwert-Signal ermittelt, das von der über dem Widerstand R2 eines Spannungsteilers R1/R2 abfallenden Spannung gebildet ist und indirekt oder direkt die Drosselspannung oder die Spannung über die LED-Strecke in der Sperrphase repräsentiert. Dazu ist der Spannungsteiler R1/R2 zwischen Masse und dem Mittelpotentialpunkt geschaltet.

Um zu vermeiden, dass in den zeitlich getrennten Phasen die beiden Istwert-Signale sich wechselseitig beeinflussen und somit keine eindeutige Auswertung möglich ist, ist zwischen den beiden Istwert-Signalpfaden ein Entkopplungselement wie bspw. ein Entkopplungswiderstand R5 oder eine Diode etc. eingefügt.

Es gilt dabei die Bedingung, dass der Widerstandswert des Shunts Rs wesentlich kleiner ist der Widerstandswert der Widerstände R1, R2 und R5.

In der Durchschaltphase des Schalters S1 bildet der Spannungsabfall über dem Shunt Rs eine Spannung mit einem wesentlich niedrigeren Innenwiderstand als die Spannungsquelle, die das zweite Istwert-Signal liefert. Insofern ist die Spannung an dem Shunt Rs dominierend und bestimmt während der Durchlassphase den Spannungspegel am Eingangspin PN2.

Wenn der Schalter S1 in den Sperrzustand geschaltet wird, fließt durch den Schalter S1 und den Shunt Rs praktisch kein Strom mehr, mit der Folge, daß das Potential am Verbindungspunkt zwischen dem Shunt Rs und dem Schalter S1 undefiniert, also floatend ist (wobei es aufgrund des Shunt Rs auf das Masse Potential gezogen wird). In diesem Fall ist die von dem Spannungsteiler R1/R2 gelieferte und über dem Widerstand R2 abfallende Spannung, die das zweite Istwert-Signal bildet, dominierend. Sie bestimmt demnach das Potential an dem Eingangspin PN2.

Die Steuerschaltung SR kann in der Sperrphase die Spannung über dem LED-Lastkreis berechnen, indem sie von der Eingangs- bzw. Betriebsspannung VIN die Spannung subtrahiert, die mittels des Spannungsteilers R1/R2 gemessen wird und - wie erwähnt - der Spannung zwischen Masse und dem Mittelpotential entspricht.

Die als ASIC ausgebildete Steuerschaltung SR weist noch einen Eingangspin PIN 7 auf, dem ein externes Dimmsignal zugeführt werden kann. Das externe Dimmsignal kann beispielsweise als binäres Signal (AUS oder EIN), als Referenzspannung oder als zuschaltbare Referenzspannung (die Referenzspannung kann zwischen einem EIN Wert mit änderbarer Amplitude oder AUS wechseln) zugeführt werden.

Wichtig ist, dass auf die vorstehend beschriebene Weise ein Eingangspin an einem IC eingespart werden kann. Dadurch wird die Schaltung vereinfacht und kann billiger hergestellt werden. Das Prinzip ist selbstverständlich nicht auf die hier betrachteten Istwert-Signale und die entsprechenden Pins beschränkt, sondern gilt ganz allgemein.

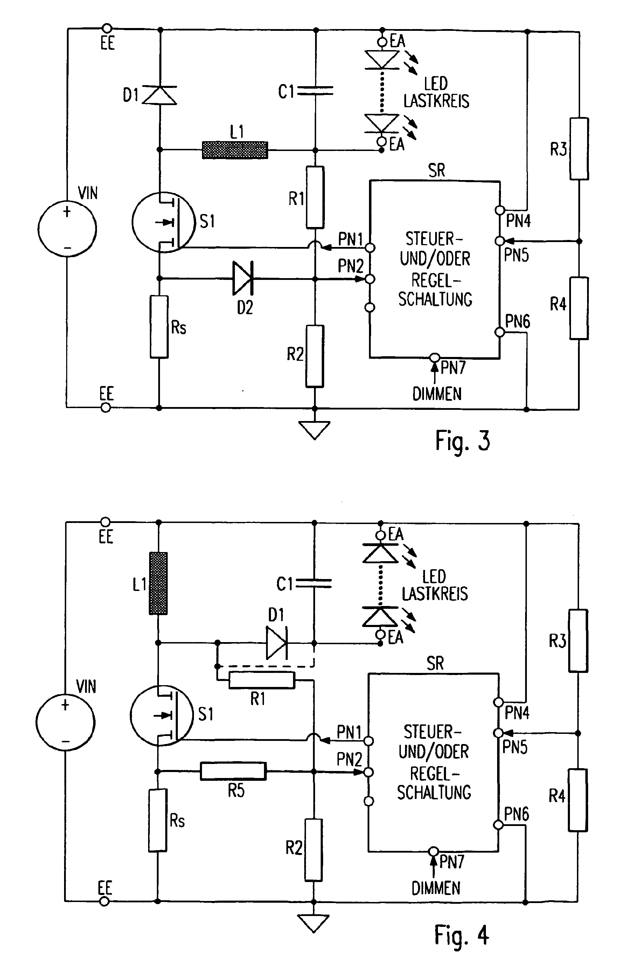

Die Schaltung nach Figur 3 ist gegenüber der Schaltung nach Figur 2 dadurch modifiziert, dass der Entkopplungswiderstand R5 hier durch eine Entkopplungsdiode D2 ersetzt ist. Diese ist so geschaltet, dass ihre Anode an dem Verbindungspunkt zwischen dem Shunt Rs und dem Schalter S1 liegt, während ihre Kathode an dem Verbindungspunkt zwischen den Widerständen R1 und R2 des Spannungsteilers R1/R2 und an dem Eingangspin PN2 liegt. Auf diese Weise wird gewährleistet, dass die Entkopplungsdiode D2 in der Durchschaltphase des Schalters S1 leitend wird und in der Sperrphase nicht-leitend. Das führt zu einer Verstärkung des Entkopplungseffektes, der bereits in Figur 2 durch den Entkopplungswiderstand R5 erreichbar ist.

Die Schaltungsvariante nach Figur 4 entspricht derjenigen nach Figur 2, wobei lediglich die Positionen der Drossel L1 und der Rückflussdiode D1 vertauscht worden sind. Außerdem greift der Widerstand R1 hier an dem Verbindungspunkt zwischen der Drossel L1 und der Rückflussdiode D1 oder zwischen den LED-Lastkreis und der Rückflussdiode D1 (gestrichelt dargestellt) an.

Mit dieser Ausführungsform soll demonstriert werden, dass das in den Figuren 1 bis 3 angewendete Tiefsetzsteller-Prinzip (Buck-Konverter) für die vorliegende Schaltung nicht zwingend ist, sondern dass stattdessen - wie in Figur 4 - auch das Sperrwandler-Prinzip (Buck-Boost-Konverter) oder auch - was nicht dargestellt ist - das Hochsetzsteller- (Boost-), isolierte Sperrwandler- (Flyback-) und Durchflußwandler- (Forward-) Prinzip verwendet werden kann.

Wenn der Abgriffspunkt des Widerstandes R1 zur Überwachung einer Spannung während der Sperrphase an den Knotenpunkt zwischen Drossel L1 und dem Schalter S1 angelegt wird, kann die Messung auch dazu dienen, während der Sperrphase den Nulldurchgang des Drosselstromes zu ermitteln. Wenn die Drossel L1 entmagnetisiert ist, kommt es zu einer Änderung der Spannung am Abgriffspunkt des Widerstandes R9 (der Knotenpunkt zwischen Drossel L1 und dem Schalter S1). Die Spannung am Abgriffspunkt des Widerstandes R9 ist während der Sperrphase annähernd gleich der Betriebsspannung VIN, solange die Drossel L1 magnetisiert ist und den Strom durch den LED-Lastkreis treibt.

Wenn die Drossel L1 nicht mehr magnetisiert ist und der Drosselstrom den Nulldurchgang erreicht, beginnt die Rücklaufdiode D1 zu sperren und die Spannung am Abgriffspunkt des Widerstandes R9 fällt ab auf einen niedrigeren Wert.

Die Kenntnis des Nulldurchganges ist vorteilhaft, weil man den Zeitpunkt des Wiedereinschaltens des Schalters S1 gerne in diesen Nulldurchgang legt. Dadurch können Schaltverluste vermieden werden, und der Schalter wird thermisch weniger belastet (aufgrund der entmagnetisierten Drossel L1 und des damit verbundenen Nulldurchgangs treten nur sehr geringe Einschaltverluste am Schalter S1 auf). Diese Art der Ansteuerung des Schalters S1 wird auch als Grenzbetrieb zwischen dem nichtlückenden und lückenden Strombetrieb bezeichnet.

Der Ladekondensator C1 parallel zu dem LED-Lastkreis kann während der Phase des Nulldurchgangs den Strom durch die LED weitertreiben. Sobald die Drossel L1 entmagnetisiert ist, kann sie den Strom durch den LED-Lastkreis nicht weitertreiben. In der Phase, bis durch das Wiedereinschalten des Schalters S1 wieder ein Strom durch die Drossel L1 fließt, kann der Ladekondensator C1 parallel zu dem LED-Lastkreis aufgrund seiner Ladung (die während der Einschaltzeit des Schalters S1 aufgeladen wird) den Strom durch die LED weitertreiben.

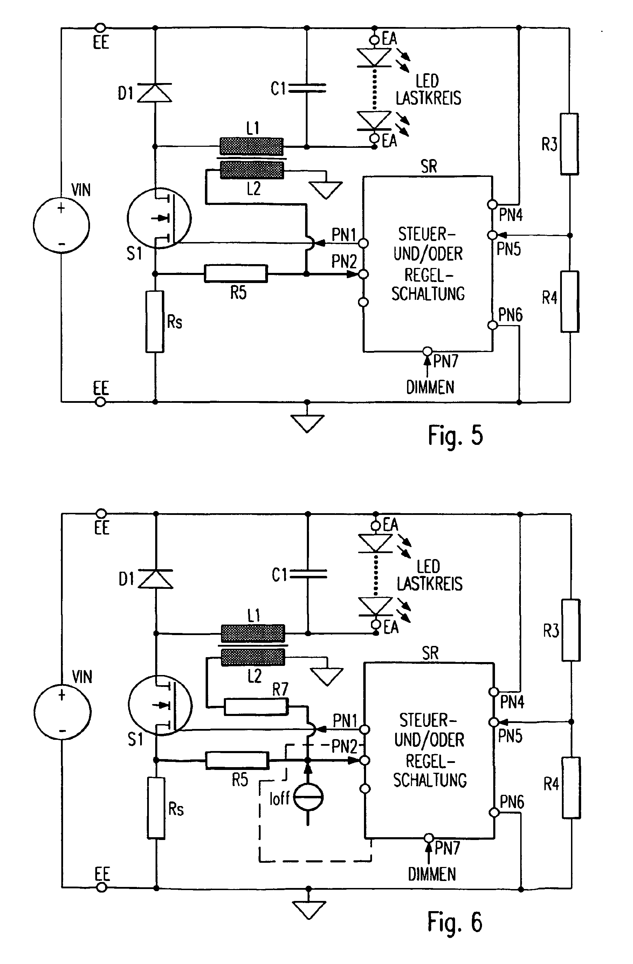

In Figur 5 ist der Spannungsteiler R1/R2 weggelassen. Stattdessen ist die Drossel L1 magnetisch mit einer weiteren Wicklung L2 gekoppelt, mit der die Drosselspannung transformatorisch ausgekoppelt werden kann.

Das bedeutet, dass in der Durchschaltphase des Schalters S1 als Istwert-Signal weiterhin der Spannungsabfall über dem Shunt Rs verwendet wird, der den Drosselstrom repräsentiert. In der Sperrphase kommt dann das zweite Istwert-Signal zur Anwendung, dass transformatorisch aus der Drossel L1 ausgekoppelt wird und die Drosselspannung repräsentiert. Über die Drosselspannung kann man natürlich bei Kenntnis der Drosselgröße (Induktivität der Drossel L1) auch den Drosselstrom errechnen. Dementsprechend ist - obwohl noch eingezeichnet - der Pin PN5 entbehrlich, dem ein weiteres Istwert-Signal zugeführt wird, das die Betriebsspannung VIN repräsentiert. Ebenfalls entbehrlich sind damit die den weiteren Spannungsteiler bildenden Widerstände R3/R4.

Diese Schaltung kann auch dazu dienen, während der Sperrphase den Nulldurchgang des Drosselstromes zu ermitteln. Die Kenntnis des Nulldurchganges ist vorteilhaft, weil man den Zeitpunkt des Wiedereinschaltens des Schalters S1 gerne in diesen Nulldurchgang legt. Dadurch können Schaltverluste vermieden werden, und der Schalter wird thermisch weniger belastet. Diese Art der Ansteuerung des Schalters S1 wird wie gesagt auch als Grenzbetrieb zwischen dem nichtlückenden und lückenden Strombetrieb bezeichnet.

Der Ladekondensator C1 parallel zu dem LED-Lastkreis kann während der Phase des Nulldurchgangs den Strom durch die LED weitertreiben. Sobald die Drossel L1 entmagnetisiert ist, kann sie den Strom durch die LED nicht weitertreiben.

In der Phase, bis durch das Wiedereinschalten des Schalters S1 wieder ein Strom durch die Drossel L1 fließt, kann der Ladekondensator C1 parallel zu dem LED-Lastkreis aufgrund seiner Ladung (die während der Einschaltzeit des Schalters S1 aufgeladen wird) den Strom durch die LED weitertreiben.

Die Ausführungsform gemäß Figur 6 ist ebenfalls dadurch gekennzeichnet, dass das zweite Istwert-Signal transformatorisch aus der Drossel L1 mit einer zweiten Wicklung L2 ausgekoppelt wird.

Über die Wicklung L2, die an die Drossel L1 magnetisch gekoppelt ist, kann die Drosselspannung transformatorisch ausgekoppelt werden. Das bedeutet, dass in der Durchschaltphase des Schalters S1 als Istwert-Signal weiterhin der Spannungsabfall über dem Shunt Rs verwendet wird, der den Drosselstrom repräsentiert.

In der Sperrphase kommt dann das zweite Istwert-Signal zur Anwendung, dass transformatorisch aus der Drossel L1 ausgekoppelt wird und die Drosselspannung repräsentiert. Über die Drosselspannung kann man natürlich bei Kenntnis der Drosselgröße (Induktivität der Drossel L1) auch den Drosselstrom errechnen und somit auf den Strom durch den LED-Lastkreis schließen. Dementsprechend ist - obwohl noch eingezeichnet - der Pin PN5 entbehrlich, dem ein weiteres Istwert-Signal zugeführt wird, das die Betriebsspannung VIN repräsentiert. Ebenfalls entbehrlich sind damit die den weiteren Spannungsteiler bildenden Widerstände R3/R4.

Andererseits ist es für den Betrieb des ASIC ungünstig, wenn dem Eingangspin PN2 eine negative Spannung zugeführt wird. Aus diesem Grunde wird dem Eingangspin PN2 außerdem noch ein Offsetstrom Ioff zugeführt, um das Potential am Eingangspin PN2 anzuheben. Vorzugsweise wird der Offsetstrom Ioff intern innerhalb der Steuerschaltung SR erzeugt und auch intern dem Eingangspin PN2 zugeführt. Diese Maßnahme verlangt eine weitere Entkopplung durch einen Entkopplungswiderstand R7.

Die Überwachung der Drosselspannung kann vorteilhafterweise bei einem sogenannten nichtlückenden Strombetrieb der Schaltung (insbesondere des Schalters S1) angewendet werden, aber auch bei einem sogenannten lückenden Strombetrieb oder einem sogenannten Grenzbetrieb zwischen dem nichtlückenden und lückenden Strombetrieb. Bei einem Betrieb im nichtlückenden Strombetrieb kann der Ladekondensator C1 parallel zu dem LED-Lastkreis sehr klein sein oder auch ganz weggelassen werden.

Diese Schaltung gemäß Figur 6 kann auch dazu dienen, während der Sperrphase den Nulldurchgang des Drosselstromes zu ermitteln. Die Kenntnis des Nulldurchganges ist vorteilhaft, weil man den Zeitpunkt des Wiedereinschaltens des Schalters S1 gerne in diesen Nulldurchgang legt. Dadurch können Schaltverluste vermieden werden, und der Schalter wird thermisch weniger belastet. Es kann somit in der Durchschaltphase des Schalters S1 als Istwert-Signal der Spannungsabfall über dem Shunt Rs ermittelt werden, und in der Sperrphase kann die Drosselspannung und / oder der Nulldurchgang des Drosselstromes ermittelt werden.

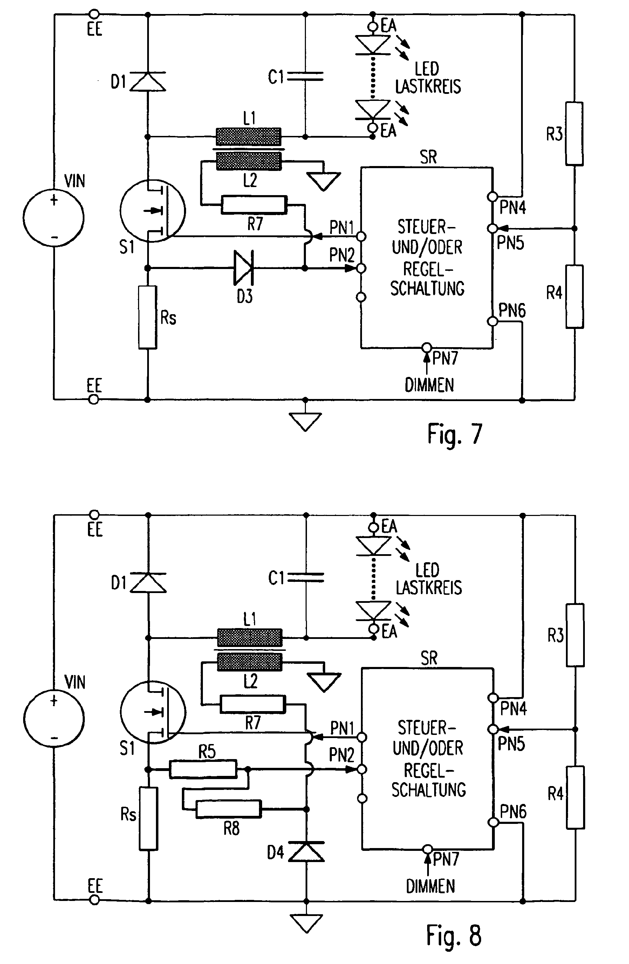

Die Ausführungsform der Schaltung nach Figur 7 entspricht derjenigen nach Figur 5, wobei lediglich anstelle des Entkopplungswiderstandes R5 eine Entkopplungsdiode D3 vorgesehen ist, die in gleicher Weise wirkt, wie dies schon im Zusammenhang mit Figur 3 beschrieben wurde. Vorzugsweise kann über die die Auskoppelwicklung L2 eine Ermittlung des Nulldurchganges des Drosselstromes erfolgen.

Die Ausführungsform nach Figur 8 ist mit derjenigen gemäß Figur 6 vergleichbar. Sie dient ebenfalls zur Ermittlung des Nulldurchganges des Drosselstromes. Der Offsetstrom wird hier durch ein Netzwerk erzeugt, dass aus einer Diode D4 und den Widerständen R7, R5 und R8 besteht. Die Diode D4 ist mit ihrer Anode an Masse gelegt. Die Kathode dieser Diode D4 ist über den Widerstand R7 mit der Auskoppelwicklung L2 verbunden. Der zuvor erwähnte Strompfad ist über einen Entkopplungswiderstand R8 mit dem Eingangspin PN2 verbunden.

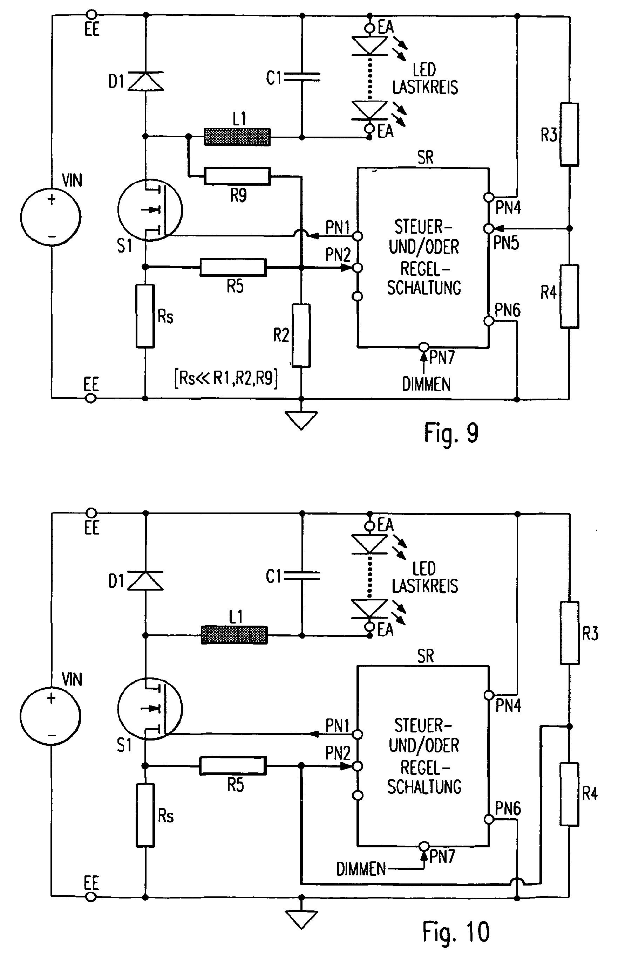

Die Ausführungsform nach Figur 9 zeigt eine alternative Möglichkeit zum Überwachen der Drosselspannung beziehungsweise der Magnetisierung der Drossel L1 und zum Erzeugen des zweiten Istwert-Signales. Hier ist der Verbindungspunkt zwischen der Rückflussdiode D1 und dem Schalter S1 über einen weiteren Entkopplungswiderstand R9 mit dem Eingangspin PN2 verbunden. Wie bereits für die Schaltungen nach den Figuren 2 bis 4 beschrieben wurde, gilt auch hier die zusätzliche Bedingung, dass der Shunt Rs sehr viel kleiner sein muss als die Entkopplungswiderstände R1, R2 und R9.

Die Überwachung der Drosselspannung beziehungsweise des Abgriffspunkts des Widerstandes R9 (der Knotenpunkt zwischen Drossel L1 und dem Schalter S1) kann wie gesagt auch dazu dienen, während der Sperrphase den Nulldurchgang des Drosselstromes zu ermitteln.

Wenn die Drossel L1 entmagnetisiert ist, kommt es zu einer Änderung der Spannung am Abgriffspunkt des Widerstandes R9 (der Knotenpunkt zwischen Drossel L1 und dem Schalter S1). Die Spannung am Abgriffspunkt des Widerstandes R9 ist während der Sperrphase annähernd gleich der Betriebsspannung VIN, solange die Drossel L1 magnetisiert ist und den Strom durch den LED-Lastkreis treibt. Wenn die Drossel L1 nicht mehr magnetisiert ist und der Drosselstrom den Nulldurchgang erreicht, beginnt die Rücklaufdiode D1 zu sperren und die Spannung am Abgriffspunkt des Widerstandes R9 fällt ab auf einen niedrigeren Wert.

Die Kenntnis des Nulldurchganges ist vorteilhaft, weil man den Zeitpunkt des Wiedereinschaltens des Schalters S1 gerne in diesen Nulldurchgang legt. Dadurch können Schaltverluste vermieden werden, und der Schalter wird thermisch weniger belastet. Diese Art der Ansteuerung des Schalters S1 wird auch als Grenzbetrieb zwischen dem nichtlückenden und lückenden Strombetrieb bezeichnet.

Der Ladekondensator C1 parallel zu dem LED-Lastkreis kann während der Phase des Nulldurchgangs den Strom durch die LED weitertreiben. Sobald die Drossel L1 entmagnetisiert ist, kann sie den Strom durch die LED nicht weitertreiben.

In der Phase, bis durch das Wiedereinschalten des Schalters S1 wieder ein Strom durch die Drossel L1 fließt, kann der Ladekondensator C1 parallel zu dem LED-Lastkreis aufgrund seiner Ladung (die während der Einschaltzeit des Schalters S1 aufgeladen wird) den Strom durch die LED weitertreiben.

Figur 10 zeigt eine Ausführungsform, bei der das zweite Istwert-Signal die Betriebsspannung VIN repräsentiert und als Spannungsabfall über dem Widerstand R4 des Spannungsteilers R3/R4 gewonnen wird. Diese Variante ist besonders dann sinnvoll, wenn die Eingangs- bzw. Betriebsspannung nicht konstant ist, beispielsweise weil sie durch Gleichrichtung der Netzspannung gewonnen wird und/oder weil keine Leistungsfaktor-Schaltung (PFC) vorgeschaltet ist. In einem solchen Fall kann die Betriebsspannung bzw. Eingangsspannung eine beachtliche Wellung aufweisen.

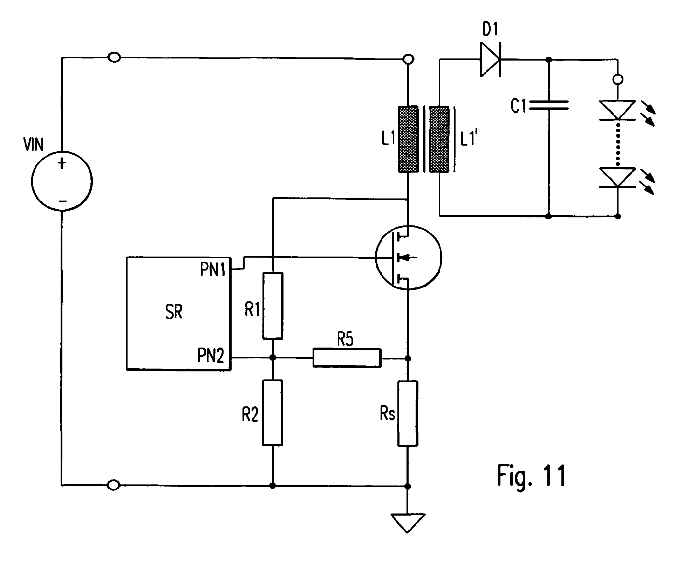

Die Schaltungsvariante nach Figur 11 unterscheidet sich von der vorhergehenden Ausführungsformen dadurch, dass die Drossel L1 magnetisch mit einer Sekundärwicklung L1' gekoppelt ist. Mit dieser Ausführungsform soll demonstriert werden, dass das in den Figuren 1 bis 3 und 5 bis 10 angewendete Tiefsetzsteller-Prinzip für die vorliegende Schaltung nicht zwingend ist, sondern dass stattdessen - wie in Figur 4 - auch ein anderes Schaltregler-Prinzip verwendet werden kann. Die in Figur 11 dargestellte Schaltungsvariante stellt ein Beispiel für einen isolierten Sperrwandler dar.

Bei Anwendung eines isolierten Sperrwandler-Prinzips kann die Drossel L1 durch eine Drossel L1 mit einer magnetisch gekoppelten Sekundärwicklung L1', die somit gemeinsam einen Transformator bilden, ersetzt werden. Die Sekundärwicklung L1' kann dabei über eine Rückflußdiode D1 und einen Ladekondensator C1 (parallel zu dem LED-Lastkreis) den LED-Lastkreis speisen. Die Drossel L1 kann zusätzlich mit einer weiteren Auskoppelwicklung L2 magentisch gekoppelt sein (nicht dargestellt).

Dabei kann beispielsweise in der Durchschaltphase des Schalters S1 als Istwert-Signal weiterhin der Spannungsabfall über dem Shunt Rs überwacht werden. In der Sperrphase kann beispielsweise in ähnlicher Weise wie bei den Ausführungsbeispielen zu den Figuren 2 bis 9 die Drosselspannung und / oder der Nulldurchgang des Drosselstromes ermittelt werden. Beispielsweise kann der Widerstand R1 an dem Verbindungspunkt zwischen der Drossel L1 und dem Schalter S1 abgreifen. Es kann aber auch ein Signal an der Sekundärseite der LED-Treiberschaltung, vorzugsweise mittels einer Potentialtrennung, abgegriffen und als Istwert-Signal der Steuer- und/oder Regelschaltung SR zugeführt werden.

Auch mit dieser Ausführungsform soll demonstriert werden, dass das in den Figuren 1 bis 3 und 5 bis 10 angewendete Tiefsetzsteller-Prinzip für die vorliegende Schaltung nicht zwingend ist, sondern dass stattdessen - wie in Figur 4 - auch das Sperrwandler-Prinzip oder auch das Hochsetzsteller- , isolierte Sperrwandler- (wie in Figur 11) und Durchflußwandler- Prinzip verwendet werden kann.

## Patentansprüche

1. Treiberschaltung für mindestens eine LED, mit:
- Eingangsanschlüssen (EE), die an eine Eingangs- bzw. Betriebsspannung (VIN) in Form einer Gleichspannung oder einer gleichgerichtete Wechselspannung anzuschließen sind, Ausgangsanschlüssen (EA), an die ein Lastkreis anzuschließen ist, der die mindestens eine LED enthält,
- einer Drossel (L1),
- einem getakteten Schalter (S1),
- einer Steuerschaltung (SR) zum Takten des Schalters (S1), die vorzugsweise als IC mit Eingangs- und Ausgangs-Pins (PN1-PN7) ausgebildet ist,
wobei die Steuerschaltung (SR) in Abhängigkeit von mindestens zwei Istwert-Signalen ein Taktsignal für den Schalter (S1) erzeugt,
wobei die beiden Istwert-Signale verschiedenen Schaltphasen des Schalters (S1) zugeordnet sind, wobei die Drossel (L1) so geschaltet ist, dass sie in einer Schaltphase des Schalters (S1) aufgeladen und in der anderen Schaltphase entladen wird,
und wobei mindestens in der letztgenannten Schaltphase ein Strom durch den Lastkreis getrieben wird,
**dadurch gekennzeichnet,**
**dass** die beiden Istwert-Signale in unterschiedlichen Zeiträumen oder Zeitpunkten der Taktung des Schalters (S1), aber an einem gemeinsamen Messpunkt der Treiberschaltung abgegriffen sind.

2. Schaltung nach Anspruch 1,
**dadurch gekennzeichnet,**
**dass** das eine Istwert-Signal den Drosselstrom während der Durchschaltphase des Schalters (S1) repräsentiert.

3. Schaltung nach Anspruch 1 oder 2,
**dadurch gekennzeichnet,**
**dass** die Eingangsspannung (VIN) durch den Potentialunterschied zwischen einem Bezugspotentialpunkt (Masse) und einem Hochpotentialpunkt definiert ist,
**dass** der Lastkreises zwischen dem Hochpotential und einem Mittelpotentialpunkt der Schaltung liegt,
**dass** das andere Istwert-Signal der Spannung zwischen dem Mittelpotential und dem Bezugspotential (Masse) entspricht und damit - bei im wesentlichen konstanter Eingangsspannung (VIN) - die Lastkreis-Spannung während der Sperrphase des Schalters (S1) repräsentiert.

4. Schaltung nach Anspruch 1 oder 2,
**dadurch gekennzeichnet,**
**dass** ein Istwert-Signal die Drosselspannung während der Sperrphase des Schalters (S1) repräsentiert.

5. Schaltung nach Anspruch 1 oder 2,
**dadurch gekennzeichnet**,
das ein Istwert-Signal den Nulldurchgang des Drosselstromes während der Sperrphase des Schalters (S1) repräsentiert.

6. Schaltung nach Anspruch 4 oder 5,
**dadurch gekennzeichnet,**
**dass** ein Istwert-Signal transformatorisch aus der Drossel (L1) über eine magnetisch gekoppelte Wicklung (L2) ausgekoppelt wird.

7. Schaltung nach Anspruch 1 oder 2,
**dadurch gekennzeichnet,**
**dass** - wenn die Eingangsspannung (VIN) nicht konstant ist - für das andere Istwert-Signal ein solches gewählt wird, dass der Eingangsspannung (VIN) entspricht und diese damit während der Sperrphase des Schalters repräsentiert.

8. Schaltung nach einem der vorherstehenden Ansprüche,
**dadurch gekennzeichnet,**
**dass** die mit dem gemeinsamen Eingangs-Pin (PN2) verbundenen Istwert-Signalpfade durch ein Entkopplungsmittel derart entkoppelt sind, dass die Istwert-Signale als separat erkannt und ausgewertet werden können.

9. Schaltung nach Anspruch 8,
**dadurch gekennzeichnet,**
**dass** das Entkopplungsmittel von einem oder mehreren Widerständen (R5, R7, R8) gebildet ist.

10. Schaltung nach Anspruch 8,
**dadurch gekennzeichnet,**
**dass** das Entkopplungsmittel mindestens von einer Diode (D3) gebildet ist, und dass die Diode (D3) so gepolt ist, dass sie in einer Schaltphase des Schalters (S1) sperrt und in der anderen leitend wird.

11. Schaltung nach Anspruch 2,
**dadurch gekennzeichnet,**
**dass** das erste Istwert-Signal eine Spannung ist, die über einem mit dem Schalter (S1) in Serie geschalteten Shunt (Rs) in der Durchschaltphase des Schalters (S1) abfällt.

12. Schaltung nach einem der vorher stehenden Ansprüche,
**dadurch gekennzeichnet,**
**dass** die Eingangsspannung (VIN) durch den Potentialunterschied zwischen einem Bezugspotentialpunkt (Masse) und einem Hochpotentialpunkt definiert ist,
**dass** der Lastkreises zwischen dem Hochpotential und einem Mittelpotentialpunkt der Schaltung liegt,
**dass** der Schalter (S1) mit einer Rücklaufdiode (D1) in Serie geschaltet ist, die mit ihrem einen Anschluss am Hochpotentialpunkt der Eingangsspannung (VIN) liegt, und
**dass** die Drossel (d1) zwischen dem Verbindungspunkt von Schalter und Rücklaufdiode und dem Mittelpotentialpunkt der Schaltung liegt, und dass die Rücklaufdiode (D1) so gepolt ist, dass sie in der Durchschaltphase des Schalters (S1) sperrt und in der Sperrphase des Schalters (S1) durchlässt.

13. Schaltung nach einem der vorher stehenden Ansprüche,
**dadurch gekennzeichnet,**
**dass** der Lastkreis von einem Ladekondensator (C1) überbrückt ist.

14. Schaltung nach einem der Ansprüche 3-13,
**dadurch gekennzeichnet,**
**dass** der Istwert-Signalpfad des anderen Istwert-Signals von einem Spannungsteiler (R1/R2) gebildet ist.

15. Schaltung nach einem der vorher stehenden Ansprüche,
**dadurch gekennzeichnet,**
**dass** ein weiteres Istwert-Signal die Eingangsspannung (VIN) repräsentiert und einem separaten Eingangs-Pin (PN5) der Steuerschaltung (SR) zugeführt wird.

16. Schaltung nach einem der vorher stehenden Ansprüche,
**dadurch gekennzeichnet,**
**dass** der Schalter (S1) von einem MOSFET gebildet ist.

17. Schaltung nach einem der vorher stehenden Ansprüche,
**dadurch gekennzeichnet,**
**dass** die Steuerschaltung (SR) weitere EingangsPins (PN4-PN7) aufweist, denen ein Dimmsignal und eine Versorgungsspannung (VIN) zuführbar sind.

18. Schaltung nach einem der vorher stehenden Ansprüche,
**dadurch gekennzeichnet,**
**dass** die Steuerschaltung (SR) einen Ausgangs-Pin (PN1) aufweist, der mit den Steuereingang für den Schalter (S1) verbunden ist.

## Claims

1. Driver circuit for at least one LED, with:
- input terminals (EE), which are intended to be connected to an input or operating voltage (VIN) in the form of a DC voltage or a rectified AC voltage,
output terminals (EA), to which a load circuit is intended to be connected, said load circuit containing the at least one LED,
- an inductor (L1),
- a clocked switch (S1),
- an open-loop control circuit (SR) for clocking the switch (S1), said open-loop control circuit preferably being in the form of an IC with input and output pins (PN1-PN7),
wherein the open-loop control circuit (SR) generates a clock signal for the switch (S1) depending on at least two actual value signals,
wherein the two actual value signals are associated with different switching phases of the switch (S1), wherein the inductor (L1) is connected in such a way that it is charged in one switching phase of the switch (S1) and is discharged in the other switching phase, and wherein a current is driven through the load circuit, at least in the latter switching phase,
**characterized**
**in that** the two actual value signals are tapped off in different time periods or at different times of the clocking of the switch (S1), but at a common measurement point in the driver circuit.

2. Circuit according to Claim 1,
**characterized**
**in that** one actual value signal represents the inductor current during the on phase of the switch (S1).

3. Circuit according to Claim 1 or 2,
**characterized**
**in that** the input voltage (VIN) is defined by the potential difference between a reference potential point (ground) and a high potential point,
**in that** the load circuit is connected between the high potential and a mid-potential point of the circuit,
**in that** the other actual value signal corresponds to the voltage between the mid-potential and the reference potential (ground) and therefore, given a substantially constant input voltage (VIN), represents the load circuit voltage during the off phase of the switch (S1).

4. Circuit according to Claim 1 or 2,
**characterized**
**in that** an actual value signal represents the inductor voltage during the off phase of the switch (S1).

5. Circuit according to Claim 1 or 2,
**characterized**
**in that** an actual value signal represents the zero crossing of the inductor current during the off phase of the switch (S1).

6. Circuit according to Claim 4 or 5,
**characterized**
**in that** an actual value signal is coupled out of the inductor (L1) by means of a transformer via a magnetically coupled winding (L2).

7. Circuit according to Claim 1 or 2,
**characterized**
**in that**, when the input voltage (VIN) is not constant, the signal selected for the other actual value signal is one which corresponds to the input voltage (VIN) and therefore represents said input voltage during the off phase of the switch.

8. Circuit according to one of the preceding claims,
**characterized**
**in that** the actual value signal paths connected to the common input pin (PN2) are decoupled by a decoupling means such that the actual value signals can be identified as being separate and evaluated.

9. Circuit according to Claim 8,
**characterized**
**in that** the decoupling means is formed by one or more resistors (R5, R7, R8).

10. Circuit according to Claim 8,
**characterized**
**in that** the decoupling means is formed by at least one diode (D3), and in that the diode (D3) is polarized in such a way that it is in the off state in one switching phase of the switch (S1) and is turned on in the other.

11. Circuit according to Claim 2,
**characterized**
**in that** the first actual value signal is a voltage drop across a shunt (Rs), which is connected in series with the switch (S1) in the on phase of the switch (S1).

12. Circuit according to one of the preceding claims,
**characterized**
**in that** the input voltage (VIN) is defined by the potential difference between a reference potential point (ground) and a high potential point,
**in that** the load circuit is connected between the high potential and a mid-potential point of the circuit,
**in that** the switch (S1) is connected in series with a freewheeling diode (D1), wherein one terminal of said freewheeling diode is connected to the high potential point of the input voltage (VIN), and
**in that** the inductor (L1) is connected between the node connecting the switch and the freewheeling diode and the mid-potential point of the circuit,
and **in that** the freewheeling diode (D1) is polarized in such a way that it is in the off state in the on phase of the switch (S1) and is in the on state in the off phase of the switch (S1).

13. Circuit according to one of the preceding claims,
**characterized**
**in that** the load circuit is bridged by a charging capacitor (C1).

14. Circuit according to one of Claims 3-13,
**characterized**
**in that** the actual value signal path of the other actual value signal is formed by a voltage divider (R1/R2).

15. Circuit according to one of the preceding claims,
**characterized**
**in that** a further actual value signal represents the input voltage (VIN) and is supplied to a separate input pin (PN5) of the open-loop control circuit (SR).

16. Circuit according to one of the preceding claims,
**characterized**
**in that** the switch (S1) is formed by a MOSFET.

17. Circuit according to one of the preceding claims,
**characterized**
**in that** the open-loop control circuit (SR) has further input pins (PN4-PN7), to which a dimming signal and a supply voltage (VIN) can be supplied.

18. Circuit according to one of the preceding claims,
**characterized**
**in that** the open-loop control circuit (SR) has an output pin (PN1), which is connected to the control input for the switch (S1).

## Revendications

1. Circuit d'attaque pour au moins une LED, avec :
- des branchements d'entrée (EE), qui sont à raccorder à une tension d'entrée ou de fonctionnement (VIN) sous la forme d'une tension continue ou d'une tension alternative redressée,
des branchements de sortie (EA), auxquels un circuit de charge est à connecter, lequel comporte ladite au moins une LED,
- une inductance (L1),
- un commutateur cadencé (S1),
- un circuit de commande (SR), qui est formé de préférence comme circuit intégré avec des broches d'entrée et de sortie (PN1, PN7), pour cadencer le commutateur (S1), dans lequel le circuit de commande (SR) génère un signal d'horloge pour le commutateur (S1) en fonction d'au moins deux signaux de valeur réelle,
dans lequel les deux signaux de valeur réelle sont associés à différentes phases de commutation du commutateur (S1),
dans lequel l'inductance (L1) est connectée de telle sorte qu'elle se charge dans une phase de commutation du commutateur (S1) et se décharge dans l'autre phase de commutation,
et dans lequel un courant est entrainé à travers le circuit de charge au moins dans cette dernière phase de commutation,
**caractérisé en ce que**
les deux signaux de valeur réelle sont prélevés dans des périodes de temps différentes ou à des instants différents du cadencement du commutateur (S1), mais en un point de mesure commun du circuit d'attaque.

2. Circuit selon la revendication 1,
**caractérisé en ce que**
l'un des signaux de valeur réelle représente le courant de l'inductance pendant la phase de mise en fonction du commutateur (S1).

3. Circuit selon la revendication 1 ou 2,
**caractérisé en ce que**
la tension d'entrée (VIN) est définie par la différence de potentiel entre un point de potentiel de référence (masse) et un point de potentiel haut,
**en ce que** le circuit de charge se trouve entre le potentiel haut et un point de potentiel moyen du circuit,
**en ce que** l'autre signal de valeur réelle correspond à la tension entre le potentiel moyen et le potentiel de référence (masse) et représente ainsi - dans le cas d'une tension d'entrée (VIN) essentiellement constante - la tension de circuit de charge pendant la phase de blocage du commutateur (S1).

4. Circuit selon la revendication 1 ou 2,
**caractérisé en ce qu'**un signal de valeur réelle représente la tension de l'inductance pendant la phase de blocage du commutateur (S1).

5. Circuit selon la revendication 1 ou 2,
**caractérisé en ce qu'**un signal de valeur réelle représente le passage par zéro du courant de l'inductance pendant la phase de blocage du commutateur (S 1).

6. Circuit selon la revendication 4 ou 5,
**caractérisé en ce qu'**un signal de valeur réelle est découplé par transformateur de l'inductance (L1) via un enroulement (L2) couplé magnétiquement.

7. Circuit selon la revendication 1 ou 2,
**caractérisé en ce que** - si la tension d'entrée (VIN) n'est pas constante - il est choisi pour l'autre signal de valeur réelle un signal qui correspond à la tension d'entrée (VIN) et qui la représente ainsi pendant la phase de blocage du commutateur.

8. Circuit selon l'une des revendications précédentes,
**caractérisé en ce que**
les trajets de signal de valeur réelle reliés à la broche d'entrée commune (PN2) sont découplés par un moyen de découplage de telle sorte que les signaux de valeur réelle peuvent être identifiés comme étant distincts et évalués.

9. Circuit selon la revendication 8,
**caractérisé en ce que**
le moyen de découplage est composé d'une ou plusieurs résistances (R5, R7, R8).

10. Circuit selon la revendication 8,
**caractérisé en ce que**
le moyen de découplage est composé au moins d'une diode (D3), et **en ce que** la diode (D3) est polarisée de telle sorte qu'elle est bloquée dans une phase de blocage du commutateur (S1) et qu'elle est conductrice dans l'autre phase.

11. Circuit selon la revendication 2,
**caractérisé en ce que**
le premier signal de valeur réelle est une tension, qui chute via un shunt (Rs) connecté en série avec le commutateur (S1) dans la phase de mise en fonction du commutateur (S1).

12. Circuit selon l'une des revendications précédentes,
**caractérisé en ce que**
la tension d'entrée (VIN) est définie par la différence de potentiel entre un point de potentiel de référence (masse) et un point de potentiel haut,
**en ce que** le circuit de charge se trouve entre le potentiel haut et un point de potentiel moyen du circuit,
**en ce que** le commutateur (S1) est connecté en série avec une diode de roue libre (D1), dont l'un des branchements se trouve au point de potentiel haut de la tension d'entrée (VIN), et
**en ce que** l'inductance (d1) se trouve entre le point de raccordement du commutateur et de la diode de roue libre et le point de potentiel moyen,
et **en ce que** la diode de roue libre (D1) est polarisée de telle sorte qu'elle est bloquée dans la phase de mise en fonction du commutateur (S1) et qu'elle est passante dans la phase de blocage du commutateur (S1).

13. Circuit selon l'une des revendications précédentes,
**caractérisé en ce que**
le circuit de charge est ponté par un condensateur de charge (C1).

14. Circuit selon l'une des revendications 3-13,
**caractérisé en ce que**
le trajet de signal de valeur réelle de l'autre signal de valeur réelle est composé d'un diviseur de tension (R1/R2).

15. Circuit selon l'une des revendications précédentes,
**caractérisé en ce qu'**un autre signal de valeur réelle représente la tension d'entrée (VIN) et est fourni à une broche d'entrée séparée (PN5) du circuit de commande (SR).

16. Circuit selon l'une des revendications précédentes,
**caractérisé en ce que**
le commutateur (S1) est composé d'un MOSFET.

17. Circuit selon l'une des revendications précédentes,
**caractérisé en ce que**
le circuit de commande (SR) présente d'autres broches d'entrée (PN4-PN7), auxquels un signal de gradation et une tension d'alimentation (VIN) sont susceptibles d'être fournis.

18. Circuit selon l'une des revendications précédentes,
**caractérisé en ce que**
le circuit de commande (SR) présente une broche de sortie (PN1), qui est reliée à l'entrée de commande pour le commutateur (S1).
